# EUROPEAN PATENT APPLICATION

(11) **EP 4 556 853 A1**
(43) Date of publication of application: **21.05.2025**
(21) Application number: 23211458.7
(22) Date of filing: 22.11.2023
(51) Int. Cl.: G01C 21/00, B60W 30/095, B60W 60/00, G08G 1/16

(54) **METHOD FOR CONSTRUCTING AUTONOMOUS ROUTES BASED ON SENSOR PERCEIVED INFORMATION AND DEVICE FOR ASSISTING AUTONOMOUS DRIVING**

(30) Priority: 15.11.2023 KR 20230158243
(71) Applicant: Kakao Mobility Corp., Seongnam-si, Gyeonggi-do 13529 (KR)
(72) Inventor: HONG, Seung Hwan, 13529 Gyeonggi-do (KR)
(74) Representative: Betten & Resch

(57) **Abstract**

Disclosed herein a method for constructing autonomous routes based on sensor perceived information and a device for assisting autonomous driving. The method includes; obtaining a travel route by tracking a moving object and at least one target object among neighboring dynamic objects around the moving object based on perception information obtained from the moving object; generating a predicted route on which a movement is estimated from the travel route, based on the travel route; generating route information including the travel route and the predicted route and incorporating the route information into map information; and updating the route information based on actual information, in case there is a predetermined range or more of deviation between the actual information on an actual movement of the target object in a region corresponding to the predicted route and the route information.

## Description

### CROSS REFERENCE TO RELATED APPLICATION

The present application claims priority to a Korean application 10-2023-0158243, filed November 15, 2023, the entire contents of which are incorporated herein for all purposes by this reference.

### BACKGROUND OF THE INVENTION

### Field of the Invention

The present disclosure relates to a method for constructing an autonomous driving route using sensor perceived information and a device for assisting autonomous driving, and more particularly, to a method for constructing an autonomous driving route, which precisely and efficiently generates route information similar to a real driving route by using perception information collected from an autonomous mobility device when route information is constructed and updated in map information for autonomous driving, and a device for assisting autonomous driving.

### Description of the Related Art

Autonomous moving objects are being developed in various mobility areas such as vehicles, robots, unmanned mobility devices, and drones, and commercialization thereof is sought. Through various tests, an algorithm and data used for autonomous moving objects, for example, perception/decision/control SW and an HD map, data for learning and the like are being developed and constructed, and the algorithm and the data are installed in autonomous driving devices to provide a related service.

An HD map for autonomous driving has a high degree of precision and a massive amount of information, but there is a disadvantage in that its construction and update is very expensive. In addition, the driving route on an HD map is not a physical installation like lanes, signs, and traffic lights but may be virtual information of a driving route of a vehicle represented on a map. Accordingly, a virtual driving route may be different from a real driving route because of an algorithm or a creator making the virtual driving route.

An autonomous moving object executes a driving plan and a decision process by referring to a driving route provided by an HD map and also predicts travel routes of neighboring objects by referring to driving route data. However, in case a real driving route and a virtual driving route set on a map are different from each other, a resulting problem is that an autonomous moving object has a high chance of undergoing a malfunction or accident.

### SUMMARY

The present disclosure is technically directed to providing a method for constructing an autonomous driving route, which precisely and efficiently generates route information similar to a real driving route by using perception information collected from an autonomous mobility device when route information is constructed and updated in map information for autonomous driving, and a device for assisting autonomous driving.

In addition, the present disclosure is also technically directed to providing a method for constructing an autonomous driving route, which provides optimal driving route information by using time series and multiview data collected from a plurality of autonomous mobilities, and a device for assisting autonomous driving.

The technical objects of the present disclosure are not limited to the above-mentioned technical objects, and other technical objects that are not mentioned will be clearly understood by those skilled in the art through the following descriptions.

According to the present disclosure, there is provided method for constructing an autonomous driving route based on sensor perceived information, the method comprising: obtaining a travel route by tracking a moving object and at least one target object among neighboring dynamic objects around the moving object based on perception information obtained from the moving object with an observation sensor and a positioning sensor; generating a predicted route on which a movement is estimated from the travel route, based on the travel route; generating route information including the travel route and the predicted route and incorporating the route information into map information; updating the route information based on actual information, in case there is a predetermined range or more of deviation between the actual information on an actual movement of the target object in a region corresponding to the predicted route and the route information through verification of the map information; and incorporating the updated route information into the map information.

According to the embodiment of the present disclosure in the method, the obtaining of the travel route may include tracking the target object by using a trajectory based on positioning information of the target object estimated from the positioning sensor and an optimal location of the target object. Also, the perception information may be collected as multiple pieces of perception information so that the perception information has multiple views in a time series, features may be extracted from each of the multiple pieces of the perception information, relative displacement information between the observation sensor and the features is generated by matching between the features, and the optimal location may be generated to minimize a spaced amount in the relative displacement information.

According to the embodiment of the present disclosure in the method, the extraction of the features and the matching between the features may be performed by referring to travel information and observation state information of the moving object, and the observation state information may represent a state in which the observation sensor of the moving object perceives the target object.

According to the embodiment of the present disclosure in the method, the method may further comprise providing the optimal location of the target object to the positioning information and the map information.

According to the embodiment of the present disclosure in the method, the generating of the predicted route may include generating the predicted route based on displacement information of the target object, speed information of the target object, the travel route, environment information of a driving route of the target object, information on a regulation applied to the driving route, travel pattern information of a route identical or similar to the driving route, and cumulative route information of a route identical or similar to the driving route.

According to the embodiment of the present disclosure in the method, the displacement information of the target object and the speed information of the target object may be provided in a time series, the generating of the predicted route generates the predicted route by using trajectory modeling including a nonlinear state transition method based on the time-series displacement information and the time-series speed information, and the trajectory modeling may be constructed to have feedback based on an error between a predicted trajectory derived by the trajectory modeling and a trajectory derived based on the perception information.

According to the embodiment of the present disclosure in the method, the generating of the route information may include determining a single piece of object travel information, which is derived through matching for multiple pieces of object travel information of the target object, as the route information, and the multiple pieces of the object travel information may be transmitted from each of a plurality of moving objects that generate a travel route and a predicted route of the target object.

According to the embodiment of the present disclosure in the method, the matching for the multiple pieces of the object travel information may include performing geometrical matching between the object travel information, clustering similar object travel information based on statistical information according to a weight of the object travel information, and based on a route model based on the clustered object travel information, generating and employing the single piece of the object travel information as the route information.

According to the embodiment of the present disclosure in the method, the incorporating the route information into the map information may include generating connection relation information that connects at least one of road information of a driving route of the target object, infrastructure information provided to the driving route, weather information of the driving route, and regulation information applied to the driving route to the route information.

According to the embodiment of the present disclosure in the method, the verification of the map information may include performing initial verification that checks at least one of integrity, continuity and regularity of the route information, performing simulation verification that identifies whether there are interference and collision between a plurality of moving objects through a simulation that virtualizes driving of the plurality of the moving objects, and correcting at least one of an object in the map information, metadata, and the route information based on an error occurring in the initial verification and the simulation verification.

According to another embodiment of the present disclosure, there is provided An autonomous driving assistant device constructing a route of autonomous driving by using sensor perceived information, the autonomous driving assistant device comprising: a communication unit configured to exchange data with a moving object; a memory configured to store at least one instruction; and a processor configured to execute the at least one instruction stored in the memory by using the data. The moving object obtains a travel route by tracking a moving object and at least one target object among neighboring dynamic objects around the moving object based on perception information obtained from the moving object with an observation sensor and a positioning sensor and generates a predicted route on which a movement is estimated from the travel route, based on the travel route. And, the processor is further configured to: generate route information including the travel route and the predicted route and incorporate the route information into map information, update the route information based on actual information, in case there is a predetermined range or more of deviation between the actual information on an actual movement of the target object in a region corresponding to the predicted route and the route information through verification of the map information, and incorporate the updated route information into the map information.

The features briefly summarized above for this disclosure are only exemplary aspects of the detailed description of the disclosure which follow, and are not intended to limit the scope of the disclosure.

The technical problems solved by the present disclosure are not limited to the above technical problems and other technical problems which are not described herein will be clearly understood by a person (hereinafter referred to as an ordinary technician) having ordinary skill in the technical field, to which the present disclosure belongs, from the following description.

According to the present disclosure, it is possible to provide a method for constructing an autonomous driving route, which precisely and efficiently generates route information similar to a real driving route by using perception information collected from an autonomous mobility device when route information is constructed and updated in map information for autonomous driving, and a device for assisting autonomous driving.

In addition, according to the present disclosure, by reflecting real driving routes in map information, the accuracy and safety of perception, planning and decision processes of autonomous moving objects can be improved, and the accuracy and productivity of map information for autonomous driving and conventional navigation systems can be enhanced.

According to the present disclosure, understanding and analyzing overall traffic flows can benefit to be used for traffic management and operation, and traffic flows may be optimized by reducing traffic congestion.

The effects obtainable from the present disclosure are not limited to the above-mentioned effects, and other effects not mentioned herein will be clearly understood by those skilled in the art through the following descriptions.

### BRIEF DESCRIPTION OF THE DRAWINGS

FIG. 1 is a view exemplifying a moving object communicating with a server and another device to transmit and receive data.
FIG. 2 is a block diagram of a moving object according to an embodiment of the present disclosure.
FIG. 3 is a block diagram of a server according to another embodiment of the present disclosure.
FIG. 4 is a view showing detailed functional modules in a moving object and a server.
FIG. 5 is a flowchart of a process performed in a moving object in a method for constructing an autonomous driving route according to yet another embodiment of the present disclosure.
FIG. 6 is a flowchart of a process performed in a server in a method for constructing an autonomous driving route according to yet another embodiment of the present disclosure.
FIG. 7 is a view exemplifying a result of location estimation of an object.
FIG. 8 is a view showing an example of route information generated by matching object travel information collected from a plurality of devices and multiple views.
FIG. 9 is a view showing another example of route information.
FIG. 10 is a view showing an example of connection relation information.
FIG. 11 is a view showing another example of connection relation information.
FIGS. 12 to 14 are views showing an example of verifying map information through update of route information.
FIG. 15 is a view exemplifying update through verification of route information.

### DETAILED DESCRIPTION

Hereinafter , exemplary embodiments of the present disclosure will be described in detail with reference to the accompanying drawings so that those skilled in the art may easily implement the present disclosure. However, the present disclosure may be implemented in various different ways, and is not limited to the embodiments described therein.

In describing exemplary embodiments of the present disclosure, well-known functions or constructions will not be described in detail since they may unnecessarily obscure the understanding of the present disclosure. The same constituent elements in the drawings are denoted by the same reference numerals, and a repeated description of the same elements will be omitted.

In the present disclosure, when an element is simply referred to as being "connected to", "coupled to" or "linked to" another element, this may mean that an element is "directly connected to", "directly coupled to" or "directly linked to" another element or is connected to, coupled to or linked to another element with the other element intervening therebetween. In addition, when an element "includes" or "has" another element, this means that one element may further include another element without excluding another component unless specifically stated otherwise.

In the present disclosure, the terms first, second, etc. are only used to distinguish one element from another and do not limit the order or the degree of importance between the elements unless specifically mentioned. Accordingly, a first element in an embodiment could be termed a second element in another embodiment, and, similarly, a second element in an embodiment could be termed a first element in another embodiment, without departing from the scope of the present disclosure.

In the present disclosure, elements that are distinguished from each other are for clearly describing each feature, and do not necessarily mean that the elements are separated. That is, a plurality of elements may be integrated in one hardware or software unit, or one element may be distributed and formed in a plurality of hardware or software units. Therefore, even if not mentioned otherwise, such integrated or distributed embodiments are included in the scope of the present disclosure.

In the present disclosure, elements described in various embodiments do not necessarily mean essential elements, and some of them may be optional elements. Therefore, an embodiment composed of a subset of elements described in an embodiment is also included in the scope of the present disclosure. In addition, embodiments including other elements in addition to the elements described in the various embodiments are also included in the scope of the present disclosure.

The advantages and features of the present invention and the way of attaining them will become apparent with reference to embodiments described below in detail in conjunction with the accompanying drawings. Embodiments, however, may be embodied in many different forms and should not be constructed as being limited to example embodiments set forth herein. Rather, these embodiments are provided so that this disclosure will be complete and will fully convey the scope of the invention to those skilled in the art.

In the present disclosure, each of phrases such as "A or B", "at least one of A and B", "at least one of A or B", "A, B or C", "at least one of A, B and C", ""at Each of the phrases such as "at least one of A, B or C" and "at least one of A, B, C or combination thereof' may include any one or all possible combinations of the items listed together in the corresponding one of the phrases.

Hereinafter, embodiments of the present disclosure will be described with reference to the accompanying drawings.

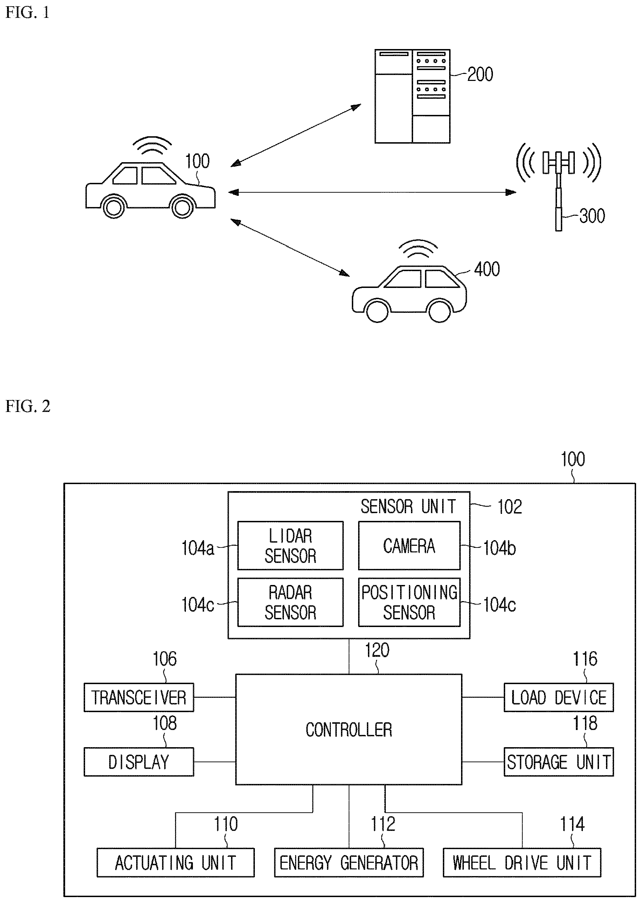

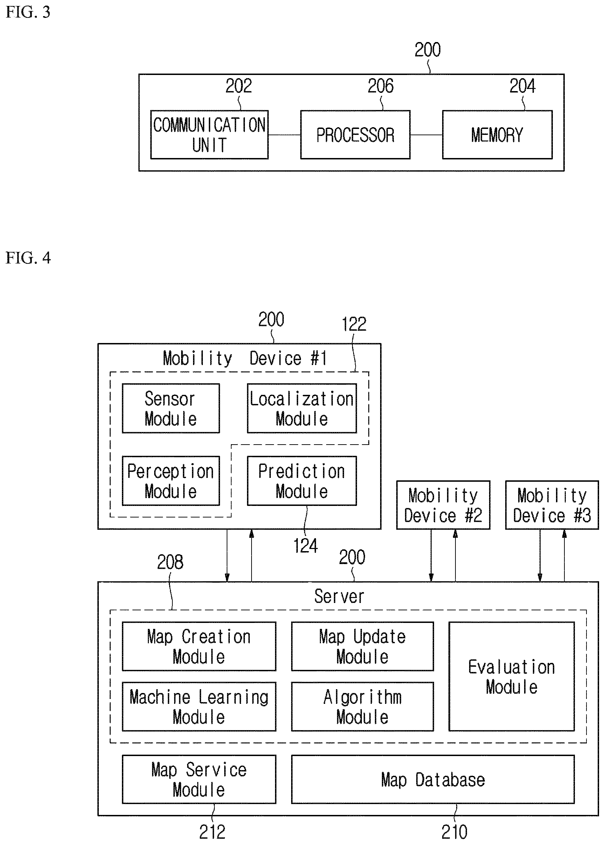

Referring to FIG. 1 to FIG. 3, hereinafter will be described a vehicle and a device for assisting autonomous driving, which implement a process for constructing an autonomous driving route by using sensor perceived information. FIG. 1 is a view exemplifying a moving object communicating with a server and another device to transmit and receive data. FIG. 2 is a block diagram of a moving object according to an embodiment of the present disclosure. FIG. 3 is a block diagram of a server according to another embodiment of the present disclosure.

Referring to FIG. 1, a moving object 100 may be a mobility device moving on the ground, in the air, or at sea and used for a specific purpose. For example, the moving object 100 may be a device, a robot, a drone, or a ship. As an example, the moving object 100 may be a mobility device implementing autonomous movement in communication with a server 200 and other devices 300 and 400. The moving obj ect 100 may transmit various types of information obtained during driving, for example, perception information based on multiple sensors, positioning information, and environment information associated with a travel route to the server 200, and based on the above-described information, the server 200 may transmit route information, map information, driving assistance information, and software to the moving object 100. As another example, the moving object 100 may exchange the above-described information in communication with the server 200 and the other devices 300 and 400 and obtain navigation information that guides a travel route. In the present disclosure, the server 200 may serve as an autonomous driving assistant device that constructs route information of autonomous driving based on a behavior of the moving object 100, perception information of a neighboring object collected from the moving object 100, and positioning information.

The present disclosure mainly describes an example of the moving object 100 as a vehicle but may also be applied to another type of moving objects described above. Hereinafter, for convenience of explanation, the moving object 100 and a vehicle may be described interchangeably.

In case the moving object 100 is a vehicle, the moving object 100 may be driven based on electric energy or fossil energy. In the case of electric energy, for example, the moving object 100 may be a pure battery-based vehicle driven only by a high-voltage battery or employ a gas-based fuel cell as an energy source. In addition, a fuel cell may use various types of gas capable of generating electric energy, and for example, the gas may be hydrogen. However, without being limited thereto, various gases may be applicable. In the case of fossil energy, the moving object 100 is driven based on fuels such as gasoline, diesel, or liquefied gas, and may be equipped with an engine that drives a wheel drive unit 114 by combustion of the fuel. The engine may be included in an energy generator 112 from a perspective of providing a driving torque of a wheel to the wheel drive unit 114.

The moving object 100 may be driven by being controlled in autonomous driving, and the autonomous driving may be implemented as semi-autonomous driving or full autonomous driving. Full autonomous driving may be provided as autonomous moving under the complete control of a controller 120 of the moving object 100 without a user's intervention even in an uncertain driving situation. Semi-autonomous driving may be provided as autonomous driving that requires a driver's intervention in a specific driving situation. When the driving situation occurs, semi-autonomous driving may be implemented such that the controller 120 disables autonomous driving and switches control to the user, and thus the user performs manual driving.

Meanwhile, the moving object 100 may perform communication with other devices 200 and 300 or the other vehicle 400. For example, another device may include a server 200 for supporting various control, state management and driving of the moving object 100, an ITS device 300 for receiving information from an intelligent transportation system (ITS), and various types of user devices. In order to support autonomous driving and various services for the moving object 100, the server 200 may transmit various types of information and software modules used for controlling the moving object 100 to the moving object 100 as a response to a request and data transmitted from the moving object 100 and a user device.

For example, the ITS device 300 may be a road side unit (RSU), and the ITS device 300 may assist a user in driving his own car or support autonomous driving of the moving object 100 by exchanging vehicle perceived data, driving control and situation data, environment data surrounding a vehicle, and map data through V2I with the moving object 100. Through V2V with the other vehicle 400, the moving object 100 may support a driver's driving his own car or autonomous driving by exchanging the above-listed data.

The moving object 100 may communicate with another vehicle or another device based on cellular communication, wireless access in vehicular environment (WAVE) communication, dedicated short range communication (DSRC) or short range communication, or any other communication scheme.

For example, the moving object 100 may use LTE as a cellular communication network, a communication network such as 5G, a WiFi communication network, a WAVE communication network, and the like to communicate with the server 200, the ITS device 300, and the other vehicle 400. As an example, DSRC used in the moving object 100 may be used for vehicle-to-vehicle communication. A communication scheme among the moving object 100, the server 200, the ITS device 300, the other vehicle 400, and a user device is not limited to the above-described embodiment.

Referring to FIG. 2, the moving object 100 may include a sensor unit 102, a transceiver 106, and a display 108.

The sensor unit 102 may be equipped with various types of detectors for sensing various states and situations occurring external and internal environments and for identifying positioning information of the moving object 100. That is, the sensor unit 102 may be configured as a multiple sensor module including heterogeneous sensors to obtain sensing data detected from each of the sensors.

Specifically, the sensor unit 102 may be equipped with an observation sensor for perceiving dynamic and static objects present around the moving object 100 and have a positioning sensor 104d capable of obtaining location information and orientation information of a vehicle. The observation sensor may be configured as a multiple sensor having a Lidar sensor 104a, a camera serving as an image sensor 104b, and a radar sensor 104c. The sensor unit 102 may obtain sensor data including perception information and positioning information by the above-described sensors. Perception information may include Lidar data including 3D perception data of surrounding objects obtained by the Lidar sensor 104a, 2D image data of surrounding objects obtained by the camera 104b, and radar data detecting the presence and movement states of surrounding objects.

The Lidar sensor may be a type of 3D perception sensor according to the present disclosure. The Lidar sensor 104a may be a sensor that observes a surrounding environment and perceives a three-dimensional shape of an object based on laser scanning. Specifically, the Lidar sensor 104a may obtain three-dimensional perception data for a surrounding environment and an object by scanning laser around the moving object 100. Three-dimensional perception data may include a point cloud representing a three-dimensional shape of an object, that is, detection data and image data for observation representing a surrounding environment. For example, detection data represent three-dimensional contours and shapes of objects and an arrangement of objects and may be provided to identify each object. For example, image data may be provided to identify an object and a surrounding environment through images of the object and the surrounding environment.

The camera 104b may obtain image data with two-dimensional image data or depth information for a surrounding environment of the moving object 100 and an object. For example, the radar sensor 104c may irradiate an electromagnetic wave with a predetermined wavelength and thus detect a behavior of an object based on an electromagnetic wave reflected from the object. For example, the behavior of an object may include the presence of the object, whether the object moves, a distance between the moving object 100 and the object, a speed of the object, and a travel direction.

To identify positioning information including its own location, a driving position, a speed, and the like, the positioning sensor 104d may be composed of a global navigation satellite system (GNSS), an inertial measurement unit (IMU), an inertial navigation system (INS), a wheel encoder, a steering sensor, and the like.

The present disclosure mainly describes sensors of the sensor units referred to for description of an embodiment but may further a sensor for detecting various situations not listed herein.

The transceiver 106 may support mutual communication with the server 200, the ITS device 300, and the neighboring vehicle 400. In the present disclosure, the transceiver 106 may transmit data generated or stored during driving to the server 200 and receive data and a software module transmitted from the server 200. In the present disclosure, the moving object 100 may transmit and receive data used in a method according to the present disclosure to and from the outside through the transceiver 106.

The display 108 may serve as a user interface. By the controller 120, the display 108 may display an operating state and a control state of the moving object 100, route/traffic information, information on an energy remaining quantity, a content requested by a driver, and the like to be output. The display 108 may display various types of information associated with route information, map information, and a driving route transmitted from the server 200. The display 108 may be configured as a touch screen capable of sensing a driver input and receive a request of a drive indicated to the controller 120.

Meanwhile, the moving object 100 may include an actuating unit 110, the energy generator 112, the wheel drive unit 114, and a load device 116.

The actuating unit 110 may be equipped with at least one module for implementing a driving operation and perform at least one driving operation of longitudinal control like acceleration/deceleration and transverse control like steering. The actuating unit 110 may be equipped with not only a pedal and a steering wheel accepting a user's request for the control but also various operating modules for generating a driving operation according to the request in the wheel drive unit 114.

The energy generator 112 may generate and supply power and electricity used for a driving power system like the wheel drive unit 114 and the load device 116. In case the moving object 110 is driven based on electric energy, for example, the energy generator 112 may be configured as an electric battery or be configured as a combination of an electric battery and a fuel cell for charging the battery. In case the moving object 100 is driven based on fossil energy, the energy generator 112 may be configured as an internal combustion engine.

The wheel drive unit 114 may include a plurality of wheels, a driving force transfer module for generating and giving a driving force to wheels or for transferring a driving force, a braking module for decelerating the driving of wheels, and a steering module for realizing transverse control of wheels. In case the moving object 100 is driven based on electric energy, a driving force transfer module may be configured as a motor module that generates a driving force based on electricity output from an electric battery. In case the moving object 100 is operated based on fossil energy, a driving force transfer module may be equipped with transmission and a gear module that transfer power of an internal combustion engine.

The load device 116 may be an auxiliary equipment mounted on the moving object 100, which consumes electricity supplied from the energy generator 112 by use of an occupant or user or converted from output of the energy generator 112. The load device may be a type of electric device for non-driving purpose excluding a driving power system like the wheel drive unit 114 in the present disclosure. For example, the load device 114 may be various devices installed in an air-conditioning system, a light system, a seat system and the moving object 100.

In addition, the moving object 100 may include a storage unit 118 and a controller 120.

The storage unit 118 may store an application for controlling the moving object 100 and various data and load the application or read and record data at a request of the controller 120. In the present disclosure, the storage unit 118 may store an application that generates object travel information associated with a moving object itself and a neighboring dynamic object to construct route information and generate map information in the server 200. Specifically, the storage unit 118 may obtain a travel route by tracking the moving object 100 and at least one target object among neighboring dynamic objects around the moving object 100 based on perception information obtained from the moving object 100, generate a predicted route based on the travel route, and store an application and at least one instruction for transmitting object travel information with the travel route and the predicted route to the server 200. Herein, the neighboring dynamic object is a mobile object moving on a lane near a driving lane of the moving object, and may be, for example, a vehicle moving on a nearby lane in a same or opposite direction, a vehicle driven on each lane connected to an intersection, and the like. A vehicle is described an example of the neighboring dynamic object, but without being limited thereto, various types of ground mobilities moving on a road or a detailed lane of the road may correspond to neighboring dynamic objects.

Meanwhile, the storage unit 118 may store and manage map information including route information and various information associated with a driving route from the server 200. Map information may be used to generate a driving route set to the moving object 100 at a request of a user or the controller 120. In addition, map information may be used for autonomous driving and include a low definition map or include an HD map together with the map. Map information may be provided to have various information and data included in the above-described object and environment.

The controller 120 may perform overall control of the moving object 100. The controller 120 may be configured to execute an application and an instruction stored in the storage unit 118. The controller 120 may enable autonomous driving in response to an autonomous driving request by a user or a setting of the moving object 100 itself and control the moving object 100. In addition, the controller 120 may disable autonomous driving by a user's release or at a request according to automatic release and control the moving object 100 to be manually driven.

In the present disclosure, by an application, an instruction and data stored in the storage unit 118, the controller 120 may track the moving object 100 and at least one target object of neighboring dynamic objects around the moving object 100 based on perception information obtained from the moving object 100 with the observation sensors 104a to 104c and the positioning sensor 104d and may obtain a travel route. Based on the travel route, the controller 120 may generate a predicted route, on which a travel from the travel route is estimated, and transmit object travel information with the travel route and the predicted route to the server 200.

In the present disclosure, as an example, the controller 120 may be implemented as a single processing module.

As another example, as in FIG. 4, the above-described processing may be replaced by distributed process in a plurality of processing modules. FIG. 4 is a view showing detailed functional modules in a moving object and a server. A sensor module is a module corresponding to the sensor unit 102 of the present disclosure, including the observation sensors 104a to 104c and the positioning sensor 104d, and may be composed of functional modules of a perception information acquisition and analysis unit 122. The sensor module may perform fusion of sensors and data processing, and when necessary, communicate with the server 200.

The perception information acquisition and analysis unit 122 may further include, apart from the sensor module, a localization module and a perception module. The localization module may accurately estimate and correct a location of an object by using perception information and positioning information. The localization module may process transformation between global and local coordinate systems. The perception module may perceive and analyze a surrounding environment and objects, identify the features of an object such as size, shape and speed, and a trajectory or a travel route of a neighboring dynamic object running on a road. A prediction module corresponds to an object prediction unit 124 and may estimate a future trajectory or a predicted route of a perceived object, for example, a neighboring dynamic object. A predicted route may be used to analyze a driving route or a traffic flow. These modules may correspond to a plurality of processing modules constituting the controller 120. In the present disclosure, the controller 120 may collectively refer to a plurality of processing modules.

Referring to FIG. 3, as described above, the server 200 may serve as an autonomous driving assistant device and include a communication unit 202, a memory 204, and a processor 206.

The communication unit 202 may support mutual communication with the moving object 100, the ITS device 300, and the neighboring vehicle 400. In the present disclosure, the communication unit 202 may receive data generated or stored during driving of the moving object 100 and the neighboring vehicle 400 and receive data and a software module from the moving object 100 and the neighboring vehicle 400. As exemplified in FIG. 4, there may be a plurality of moving objects 100 illustrated in FIG. 1 and FIG. 2, and the communication unit 202 may receive object travel information from the plurality of moving objects 100. The plurality of moving objects are marked as Mobility Device #1~4 in FIG. 4, and the moving objects may be referred to as a mobility device capable of driving. Each of the plurality of moving objects 100 may obtain a travel route by tracking at least one target object of neighboring moving objects based on perception information and positioning information of the moving object itself and the target object, generate a predicted route based on the travel route, and construct object travel information including the travel route and the predicted route. In addition, the processor 206 may transmit a real-time perceived situation, a route update, and an urgent command, which are generated based on the object travel information and various information, to the plurality of moving objects 100 through the communication unit 202.

The memory 204 may store an application for controlling the server 200 and various data and load the application or read and record data at a request of the processor 206. In the present disclosure, the memory 204 may store an application for constructing map information including route information based on object travel information transmitted from the moving object 100. Specifically, the memory 204 may generate route information based on a travel route and a predicted route and incorporate the route information into map information, reflect a real travel route of a target object, that is, a real route in the map information by verifying the map information, and store an application for processing correction suitable for various features required for route information and at least one instruction.

Meanwhile, the memory 204 may manage map information constructed to include route information and various information for planning route information and transmit the information to the plurality of moving objects 100 in order to support autonomous driving. In the present disclosure, constructing may mean including both generating map information based on primarily generated route information and updating the map information based on route information reflecting real routes. In the present disclosure, route information may provide not only real-time travel trajectory of the moving object 100 and a neighboring dynamic object but also an expected travel trajectory of the moving object according to each detailed lane in map information. A real-time travel trajectory may help with establishing real-time route plans of the moving object 100 performing autonomous driving and another moving object 100. A travel trajectory expected on a detailed lane may be registered to map information and correspond to an estimated trajectory conventionally realized on a detailed lane. An estimated trajectory may virtually guide a route of the moving object 100 moving in a region including the trajectory or may be provided to establish a route plan of the plurality of moving objects 100 so that no interference occurs among the plurality of moving objects 100. In addition, an estimated trajectory may also be used to analyze overall traffic of the region.

The processor 206 may perform overall control of the server 200. The processor 206 may be configured to execute an application and an instruction stored in the memory 204.

In the present disclosure, the processor 206 may receive object travel information of a target object including a travel route and a predicted route from the plurality of moving objects 100 by using an application, an instruction and data stored in the memory 204, generate route information based on the object travel information and add the route information to map information. By verifying map information, the processor 206 may update the map information through a real route and process correction suitable for various features required for route information.

In the present disclosure, as an example, the processor 206 may be implemented as a single processing module.

As another example, as in FIG. 4, the above-described processing may be replaced by distributed process in a plurality of processing modules. FIG. 4 is a view showing detailed functional modules in a moving object and a server. The above-described function of the processor 206 may be performed in a combination of a map creation module, an evaluation or verification module, a map update module, a machine learning module, and an algorithm module. These modules may correspond to a route information construction unit 208. The map creation module may create a precise map including route information based on perception information of a static object and a dynamic object and positioning information of these objects. The evaluation or verification module may evaluate and verify the accuracy and efficiency of all the data and processes in map information. The update module may continuously update and renew map information based on real-time data and user feedback received from the moving object 100. The machine learning module may train and optimize a model for assisting autonomous driving based on object travel information and various data, for example, a module constructing route information and map information. This may improve tasks such as perception of an object and prediction of a trajectory. The algorithm module may control and optimize a mathematical operation for performing a specific task for assisting autonomous driving, for example, route planning, traffic analysis, and the like.

A functional module of the server 200 may include a map database and a map service module as well as a module constituting the processor 206. The map database may correspond to a map storage unit 210 and be embedded in the memory 204. The map database may have route information and map information constructed in the server 200. The map service module may correspond to a map information service unit 212 and share a map constructed in the map information server 200 with another system, that is, a plurality of moving objects, and provide various map-based services.

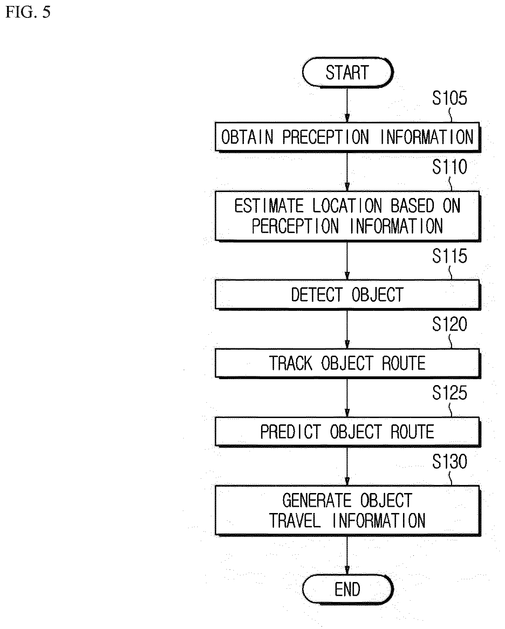

In the present disclosure, the plurality of moving objects 100 are described to generate and transmit object travel information of a target object to the server 200 and construct map information including route information based on multiple pieces of object travel information. As another example, the plurality of moving objects 100 may transmit perception information and positioning information detected from a neighboring dynamic object, and the server 200 may construct map information based on these pieces of information. As yet another example, the moving object 100 may receive perception information, positioning information and various information from the server 200 and construct map information including route information. Hereinafter, for convenience of explanation, a process of constructing a route of autonomous driving will be described according to the examples mentioned in FIG. 2 and FIG. 3. Specifically, the processing of the controller 120 of the above-described moving object and the processor 206 of the server 200 will be described in detail through FIGS. 5 to 13.

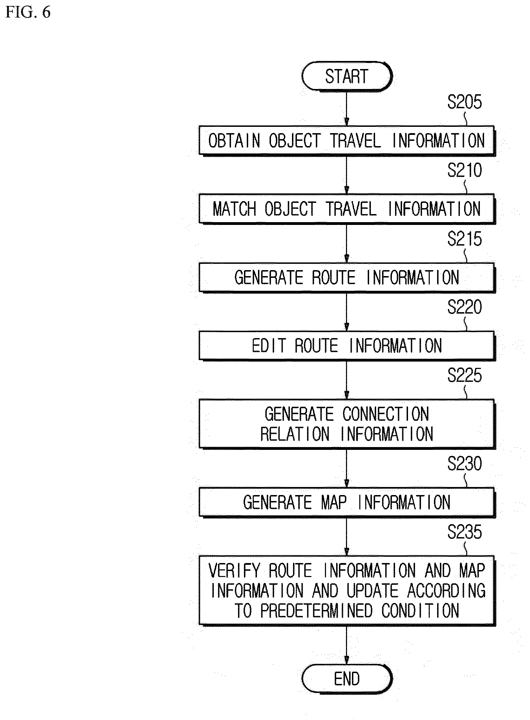

A method for constructing an autonomous driving route according to the present disclosure may be implemented by a combination of the processes illustrated in FIG. 5 and FIG. 6. FIG. 5 and FIG. 6 are flowcharts of a process performed in a moving object in a method for constructing an autonomous driving route according to yet another embodiment of the present disclosure. FIG. 6 is a flowchart of a process performed in a server in a method for constructing an autonomous driving route according to yet another embodiment of the present disclosure. Hereinafter, for convenience of explanation, the controller 120 of the moving object 100 and the processor 206 of the server 200, which process the processes in FIG. 5 and FIG. 6, will be abbreviated to the moving object 100 and the server 200 respectively, but these terms may be used interchangeably

Referring to FIG. 5, each of the plurality of moving objects 100 exemplified in FIG. 4 may obtain perception information and positioning information of a moving object and at least one target object of dynamic objects around the moving object by using the observation sensors 104a to 104c and the positioning sensor 104d (S105). Because the plurality of moving objects 100 perform an actually same process as that of FIG. 5, for convenience of explanation, the plurality of moving objects will be referred to as the moving object 100 below.

Next, the moving object 100 may estimate a location of the target object based on the perception information (5110).

The perception information may be collected as multiple pieces of perception information such that the perception information may have multiple views in time series. Features are extracted according to each of multiple pieces of perception information, and relative displacement information between the observation sensors 104a to 104c and the features may be generated by matching between the features. For example, a feature may be a line of a target object, an edge, a predetermined shape of plane, or a geometric shape similar to a predesignated form. Extraction of features and matching between the features may be performed by referring to travel information and observation state information of the moving object 100. The observation state information may represent a state in which the observation sensors 104a to 104c of the moving object 100 perceive a target object. For example, the travel information of the moving object 100 may be generated based on positioning information and perception information of the moving object 100 running and equipped with the observation sensors 104a to 104c that perceive a neighboring dynamic object. The moving object 100 may identify its own travel trajectory by analyzing change data of positioning information and change data of perception information. Observation state information may include an orientation, a position and the like of each sensor constituting the observation sensors 104a to 104c that observe a target object according to a travel trajectory of the moving object 100 that is running.

Relative displacement information may be a relative distance between a target object and the observation sensors 104a to 104c, which is measured by the observation sensors 104a to 104c of the moving object 100, an orientation of the target object, and the like. The moving object 100 may also produce relative displacement information based on positioning information of another moving object and positioning information of the moving object itself in communication with the another moving object that is a neighboring dynamic object.

A location of a target object may be estimated by being so generated as to minimize a spaced amount in the relative displacement information.

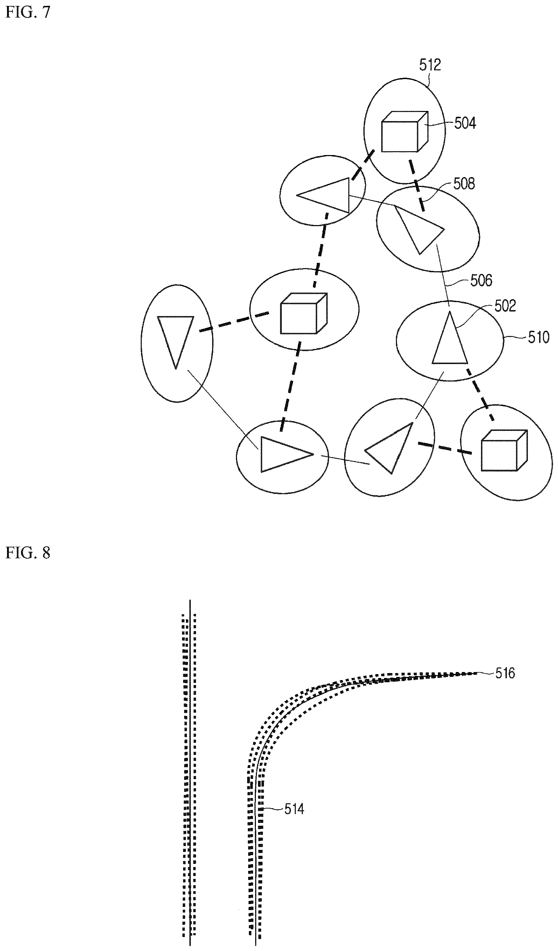

FIG. 7 is a view exemplifying a result of location estimation of an object. A moving object 502 may observe a target object 504 by an observation sensor, while moving along a driving course 506. The driving course may be data included in travel information of the moving object 502, and an observation relation 508 of the moving object 502 for the target object 504 may be data included in observation state information. The moving object 502 may collect multiple pieces of perception information along the driving course 506, and feature may be extracted from each of the multiple pieces of perception information with reference to the driving course 506 of the moving object 502 and the observation relation 508. The moving object 502 may generate relative displacement information between an observation sensor and features through feature matching based on the driving course 506 and the observation relation 508.

Perception information of the target object 504, which is derived by an observation sensor, may have expected perception errors 510 and 512 due to various causes. For example, the expected perception errors 510 and 512 may be caused by an observation sensor of the moving object 502 and an observed perception of the target object 504. Accordingly, by considering the expected perception errors 510 and 512, the moving object 502 may generate an optimal location that minimizes a spaced amount in relative displacement information, and thus estimate a location of the target object 504.

Meanwhile, at this step, the moving object 100 may further include providing an optimal location of the target object to positioning information and map information. Specifically, estimated locations represented as optimal locations of a plurality of target objects and collected information of the moving object 100 may constitute a geometric network. Location information of a target object may be corrected through a process of minimizing a spaced amount or an error between estimated locations in a network. Combining what is described above, precisely corrected location information is estimated, and the precisely corrected location information may be combined with positioning information of a target object and map information managed in the memory 204 in order to contribute to operating another system and creating a map. In addition, feature-related information, which is used to estimate and minimize an optimal location in a network, may be provided to map information. Accordingly, in case location estimation and route planning of the moving object 100 and another moving object are performed based on perception information and map information of the moving object 100, feature-related information may be referred to in processing associated with features due to a location change of a sensor and location identification of an object. For example, location information may be estimated through a combination of location information estimating a location change of a sensor, and a calculation result of a location change of features in sensor data may be used to extract and match feature information.

Next, the moving object 100 may determine a target object with an estimated location as a target object for generating object travel information and generate object information by using the observation sensors 104a to 104c and positioning information and by continuously detecting the target object (S 115). Perception through detection of a target object may be processed to identify a shape and an attribute of the target object. Details of object information will be described at step S120 below.

Then, the moving object 100 may obtain a travel route of the target object by using positioning information of the target object estimated from the positioning sensor 104d and a trajectory based on an optimal location of the target object and by tracking the target object.

A trajectory of the target object based on an optimal location is a trajectory where the target object moves while being continuously observed, and a travel trajectory of the target object may be estimated by using an optimal location according to perception information of the observation sensors 104a to 104c that the moving object 100 continuously obtains while running.

As described above, object information of a tracked target object may basically have, by way of example, a location and an orientation of the target object and also have a shape, a color, a class, an identifier, a movement speed, and an angular speed of the object, an observation time, and the like. As for location information of a target object, a movement location at a center point of the target object may be employed as location information. Location information may be represented by a three-dimensional or two-dimensional coordinate in a predetermined coordinate system, and different coordinate systems may be used according to situations. A relative coordinate may represent a relative relation between a target object and a sensor according to a coordinate system of an observation sensor. An absolute coordinate may represent a fixed location associated with Earth or a specific map. Location information is important for accurate tracking and analysis of a target object and may be used to model a movement and a behavior of the object in an overall system together with other data. Location of an object may be selectively converted from a relative coordinate of a sensor to an absolute coordinate. This conversion is helpful in identifying an accurate distance and an orientation relation between an object and a vehicle.

An orientation of a target object may represent a direction that the target object is heading toward. For example, an orientation may express a heading of a target object or be expressed by a rotation value of each two-dimensional or three-dimensional axis, a quaternion, a rotation matrix, and the like. A heading may simply represent a front of an object, and complex rotation information may be expressed by a rotation value for each axis in two dimensions or three dimensions. A quaternion and a rotation matrix may describe a rotation in a three-dimensional space.

Information on an identifier, a class, and a speed of an object may be used for re-identification of the object during tracking of a target object. When a same target object is tracked through a plurality of frames of Lidar data and/or image data or observed values, a unique identifier of the target object may be used to consistently identify the target object. A class represents a type or classification of a target object and may be distinguished into, for example, vehicle, pedestrian, bicycle, and the like. Speed information represents a movement speed and an orientation of an object, and this may be used as an essential variable for predicting a future location and behavior of the object.

Meanwhile, perception information of the observation sensors 104a to 104b may be obtained as multiple views, for example, t, t+1, and t+2. A same target object may be repeatedly detected in multi-view perception information. The moving object 100 may identify a same target object in multi-view perception information by applying a tracking algorithm employing an association method and/or a filtering technique (e.g. Kalman filter) and track a trajectory of the identified target object, that is, the running target object. In addition, multi-view tracking may reduce a temporary sensor noise or detection error and be used for accurate tracking of an object.

Based on what is described above, the moving object 100 may generate a location and feature information of a target object through perception information of the observation sensors 104a to 104c and track a trajectory of each object by connecting object information detected as multiple views. To sum up, as object information detected with the passage of time is connected, the moving object 100 may track a motion and a trajectory of each target object and obtain a travel route of the target object based on the motion, the trajectory, and positioning information. Thus, a travel pattern and a behavior of an object may be analyzed, and this may attribute to safe driving of a vehicle.

Next, the moving object 100 may generate a predicted route, in which a travel is estimated from a travel route, based on the travel route that a target object has been running (S125).

The moving object 100 may generate a predicted route of a target object based on at least one of displacement information of the target object, speed information of the target object, a travel route, environment information of a driving route of the target object, information on a regulation applied to a driving route, travel pattern information of a route identical or similar to the driving route, and cumulative route information of a route identical or similar to the driving route. Displacement information includes a location and an orientation of a target object based on a travel route, and the location and the orientation are actually the same as described at step S120. Environment information may include, for example, a road shape, a traffic flow state, weather, and accident information, which are associated with a driving route. Environment information may be a driving scenario constructed as a combination of the example data listed above, and the driving scenario may be prepared beforehand for route planning and traffic analysis. A driving scenario corresponding to a driving route may be provided to generate a predicted route.

Regulation information may include information associated with, for example, a speed limit, a driving caution zone, no parking zone, and the like. Travel pattern information may be received from the server 200 and include a behavior pattern analyzed based on past driving trajectorys of moving objects running on a current driving route and/or a route similar to the driving route. Cumulative route information may be a set of trajectorys accumulated on a route identical or similar to a current driving route.

Displacement information of a target object and speed information of the target object may be provided in a time series. The moving object 100 may generate a predicted route by trajectory modeling including a nonlinear state transition method based on time-series displacement information and time-series speed information. Trajectory modeling may be constructed to have feedback based on an error between a predicted trajectory derived from the trajectory modeling and a trajectory derived from perception information.

If trajectory modeling is described in detail, a travel route of a target object according to multi-view observation information may represent a location, a speed, and an orientation of the target object as a change over time. Data associated with a travel route may be used to form a state space model of a dynamic system and may describe a transition from a current state of the system to a future state. A nonlinear filtering method, for example, an extended Kalman filter (EKF) or a particle filter may be used, and the method may model data.

A dynamic model may predict a future state based on a current state and a control input. A current state may be mapped to a state of a next view through a nonlinear state transition function f(*x̂*_{*k*/}*ₖ₋₁=f(x̂*_{*k-1*/}*ₖ₋₁, uₖ)*)*.* This may consider a physical constraint, dynamics, a control input, and the like. A difference between a predicted trajectory and an actual sensor observation is considered as an error, and this error may be analyzed in a complementary way and thus be used to enhance the accuracy of a model. To this end, *P*_{*k*/}*ₖ₋₁=FₖP*_{*k-1*/}*ₖ₋₁Fₖ^{T}+Qₖ* may be applied as error covariance through linearization. The covariance P represents uncertainty of a system, and the process covariance Q represents system noise. These two values are used to calculate a Kalman gain so that a predicted state is adjusted and optimized. This process is consecutively performed to contribute to enable the system to be adjusted in real time and a future state to be further predicted accurately. In addition, a predicted route may also be inferred by machine learning.

Next, the moving object 100 may generate an object travel route by merging a travel route and a predicted route, which are generated according to each target object, and transmit the object travel information to the server 200 (S130). As exemplified in FIG. 4, each of the plurality of moving objects 100 may transmit object travel information generated by perceiving a target object.

Referring to FIG. 6, as exemplified in FIG. 4, the server 200 may obtain object travel information from the plurality of moving objects 100 (S205).

Next, the server 200 may derive a single piece of object travel information by matching multiple pieces of object travel information of the target object (S210).

In order to match the multiple pieces of object travel information, the server 200 may perform geometric matching between the multiple pieces of object travel information. Then, the server 200 may cluster similar object travel information based on statistical information according to a weight of object travel information. The server 200 may generate a single piece of object travel information by a route model based on the clustered object travel information.

Object travel information transmitted from each moving object 100 may be matched using filtering, correction, and an optimization technique, and thus accurate and reliable object travel information may be finally generated. Such a process plays an important role for an autonomous moving object in perceiving and understanding an environment in real time. Thus, the moving object 100 may have a keen insight into a surrounding environment and determine autonomous driving control safely and effectively. In addition, even under a complex road condition and an unexpected situation, an ability of quick and accurate response may be improved.

As for the matching, when object travel information is collected from multiple views that a plurality of moving objects have, the object travel information from the plurality of moving objects may have uncertainty due to a location estimation error, detection, tracking, and a prediction error. Multiple pieces of object travel information with uncertainty may be matched to a single piece of object travel information represented as an optimal estimate through a matching process using a mathematical and statistical method. Uncertainty occurring during a process of collecting object travel information may be attributable to various causes. For example, a precision limit of a sensor, environmental noise, and a blocking phenomenon from another object may cause a location estimation error. In addition, a complex situation assessment in a detecting, tracking, and predicting process may also aggravate uncertainty.

A process of matching multiple pieces of object travel information with uncertainty to a signal piece of object travel information may be performed by using a technique such as data fusion, filtering, and smoothing. Uncertainty may be reduced by considering a correlation and continuity among multiple pieces of object travel information collected from each of multiple views.

A matching process may be performed through statistical modeling and optimization. For example, a bayesian filtering method such as a Kalman filter and a particle filter may be used to fuse various measured values for estimating a change of situation according to time and minimizing uncertainty. An optimal single object travel route may be derived as exemplified in FIG. 8. FIG. 8 is a view showing an example of route information generated by matching object travel information collected from a plurality of devices and multiple views. FIG. 8 illustrates trajectorys of two target objects, multiple pieces of object travel information 514 corresponding to each trajectory are collected, and the server 200 may generate a single piece of object travel information according to each trajectory through the matching.

As an example of matching multiple pieces of object travel information collected at multiple views in a plurality of moving objects, there may be a matching process that considers a geometric feature between data. A geometric matching process may perform matching through coordinate information and statistical information, and these information may be selectively used.

When handling coordinate information, each piece of object travel information may be recorded in a relative coordinate. Object travel information needs to be converted into a unified coordinate system. In this process, consistency between different data may be secured by converting a relative coordinate into a common reference system. Location data is analyzed based on converted coordinate information, and the process may analyze common information of location information, a universal set of location information, and similarity of location information. Through this analysis, correlated data may be grouped, or a clustering task for identifying connectivity may be performed. Thus, correlation between data is understood more clearly, and a ground for adequately processing complex space information is prepared.

Statistical information may reflect a weight and a degree of reliability of collected data and affect the accuracy of location estimation and object perception. Statistical information plays an important role in evaluating the quality and accuracy of data and may be used to identify a feature or pattern of object travel information under a specific condition. In a clustering process, statistical information is used to group or classify data with a similar feature.

Clustering of data is an important process for understanding and interpreting a complex pattern of a driving route and may be performed by selecting a geometric model suitable for a driving route. A geometric model may be expressed in various forms such as points, lines, and planes, and a line form may be generally used. A linear model may be expressed as a polynomial, a straight line, a curve, and the like according to a geometric feature of a driving route, and a coefficient may be estimated according to a selected mathematical model in order to clearly represent a route.

When a coefficient of a model is estimated from a plurality of clustered driving routes, an error between each travel route and an estimated model may be measured, and a coefficient minimizing an error may be obtained by using an optimization method like a method of least squares. Accordingly, a more accurate and uniform driving route model may be obtained from clustered data.

For efficiency of calculation, a specific approach may be used to estimate a model coefficient. It may be important to generate an initial model through random sampling and to evaluate consistency with overall data or sampled data. By selecting a model with highest accuracy from models estimated through a repeated sampling and estimation process, complexity of data may be managed, and an optimal driving route model may be effectively derived.

Next, the server 200 may generate route information based on a single piece of object travel information determined in the above-described process (S215).

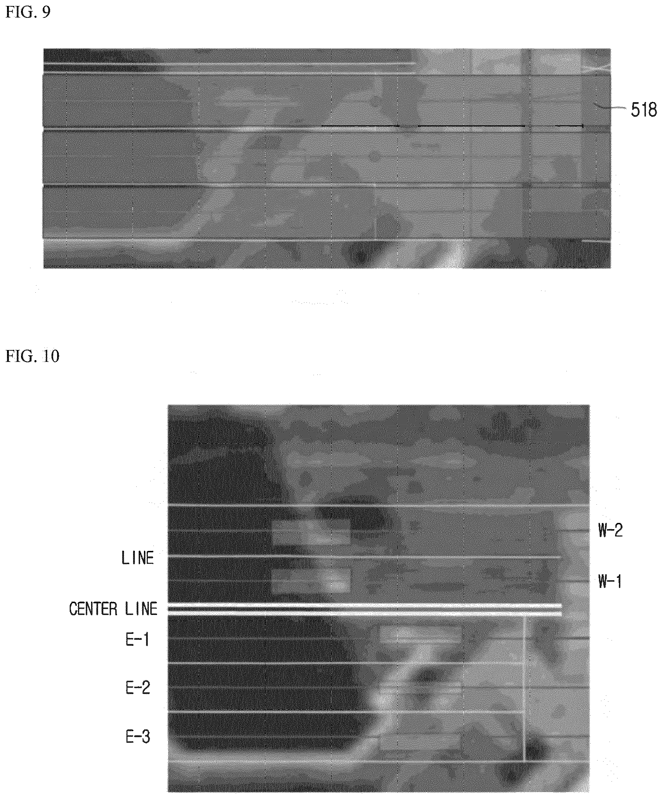

A single piece of object travel information inferred by the optimal driving route linear model at step S210 may be expressed by various methods so that route information may be generated. This may sufficiently reflect the complexity and diversity of route information. In terms of geometry, route information may be expressed by linear route information 516 with a vertex as exemplified in FIG. 8 or may be expressed by polygonal route information 518 as exemplified in FIG. 9. FIG. 9 is a view showing another example of route information. As exemplified in FIG. 10, linear route information with a vertex may express road marking objects such as a stop line 524 and a crossed node 528 as a driving route 526.

As another example, route information may be constructed as a route using a specific mathematical model and a coefficient applied thereto. Such an expressing method may accurately reflect a shape of line and a structure. Furthermore, the expressing method may define a variety of attribute information of a driving route. For example, an ID of a route, a movement direction, a road type, a speed limit, a lane number, and the like may be included. In addition, as complex link information such as a connection between driving routes and a relation with a road facility may also be included, the consistency with an overall traffic system and its efficiency may be improved. This integrated approach may improve the performance of a driving system by constructing route information flexibly and accurately.

Next, the server 200 may edit route information (S220).

Editing of route information may be accompanied by a noise removal process and a linear expression optimization process. The processes may remove unnecessary noise from estimated route information and transform a route to a smooth and continuous linear shape.

To this end, various techniques and procedures may be applied, and each procedure may be adjusted for a specific purpose. Apart from initial steps like random sampling and model estimation, there are methods for carefully processing data. For example, various filtering techniques may be applied. Such filtering is useful to remove noise from original data and emphasize a main feature. For example, the filtering techniques may be a moving average of data in a specific window, a gaussian filter, a median filter, spline interpolation, a Kalman filter, a Fourier transform, contour tracing, deep learning-based filtering, morphological operations, probabilistic modeling, and the like.

As a moving average calculates an average of data within a designated window size, a window may move along a data set. A moving average may reduce nose by making a short change on a route gentle. A gaussian filter may calculate a weighted average of neighboring points by using a gaussian distribution. As points close to a center are given a larger weight than distant points, a gaussian filter may effectively remove noise, while preserving details of a signal. A median filter may use a median value of data points within a given window. Because a value at the center among all the value within a window is selected, an extreme value or an outlier may have no effect.

Spline interpolation may generate a more natural driving route by smoothly connecting a series of points on a driving route. Spline interpolation may remove unnecessary noise and angles by forming an elongated curve. A Kalman filter may be used to estimate uncertainty of a dynamic system and is useful to reduce uncertainty like sensor noise. Fourier transform may separate noise through frequency domain analysis of a driving route and maintain only a necessary frequency component. This method is effective especially in removing periodic noise on a complicated route.

Contour tracing may be used to draw a line along a specific feature on a route and may form a linear or curved route by being corrected when necessary. Deep learning-based filtering may learn and remove a complex noise pattern by using an artificial neural network. This method may be effective in separating noise and a signal especially in a complex environment. Morphological operations may be used to manipulate a geometrical shape of a route and are used for noise removal, hole filling, outline extraction, and the like. Probabilistic modeling may use a probability model to quantify uncertainty of route information and to derive an optimal route. A technique like bayesian filtering is probabilistic modeling.

In addition, noise may be removed more effectively through a sophisticated combination between a measured value and a model value. This overall editing process improves accuracy of a route and increases applicability in a real driving environment. A result thus processed may provide more precise route information and ensure rigid performance in various driving scenarios and environments.

Next, the server 200 may generate connection relation information that connects route information and at least one of a static object on a road associated with a driving route of a target object, a semi-static object, and environment information (S225).

For example, a static object of a road may be road information of a route that a target object is running, and infrastructure information provided to the route that the target object is running. Road information is information indicating or guiding a driving route of a moving object on a road and may include, for example, a lane of the road, a stop line, an interchange of the road, a junction, a U-turn, a driving direction mark (e.g. straight, left-turn), and the like. Infrastructure information is a facility installed on a road and affecting a driving route and may be, for example, a traffic light and a road sign. A semi-static object is a factor affecting driving or a route, though not an object physically present on a road, and may include, for example, regulation information imposed on the road such as a speed limit and a driving caution zone. Environment information may include, for example, a traffic flow state, weather, and accident information.

If generation of connection relation information is described in detail, it is possible to define and analyze not only a mutual interaction between driving routes according to route information of target objects but also a complex connection relation between a driving route and relevant information. For example, various factors such as a traffic flow, a road type, and a safety regulation may be comprehensively considered for a connection relation. Thus, it may be utilized for application areas such as efficient driving route planning, traffic management, and safety analysis. Definition and analysis of a connection relation may consider a complex interaction in relation to topology of a road network as well as geometrical and statistical analysis.

FIG. 10 is a view showing an example of connection relation information. FIG. 10 is an example result of a connection relation between driving routes set based on a centerline and a heading. According to a driving heading, an east group (E) and a west group (W) are separated, and each line may be classified and grouped based on a separated group. The classification plays an important role in planning a driving route of an autonomous moving object and performing a lane change. Based on the centerline, driving routes of E-1, E-2, E-3 and the like may be sequentially given to each line. A driving route enables determinations of a moving object such as lane change, left-turn/right-turn movement, and speed control to be made more accurately and efficiently. Such a structured representation may be connected with a traffic management system and be used for traffic flow prediction and safety analysis.

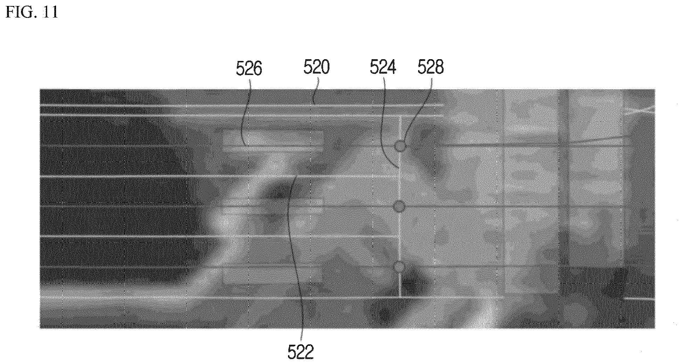

A driving route may play an important role in defining a connection relation among road structures like a stop line, a lane, a traffic light, and a road sign. As exemplified in FIG. 11, through geometric crossing relation analysis of a connection relation between a stop line 524 and a driving route 526 on a road with a centerline 520 and a lane 522, a node object 528 may be generated at a crossing point, and a connection relation may be recorded in attribute information of the driving route 526, the stop line 524, and the node object 528. FIG. 11 is a view showing another example of connection relation information. Thus, a driving plan and a judgment logic of an autonomous moving object according to a change in a traffic light and an event on a pedestrian crossing may be designed in more precise and diverse ways. In addition, the connection relation may also be used to improve a response ability of an autonomous moving object in a real-time change of traffic situation, road work information, and an urgent situation.

As for a further example of connection between route information and relevant information for generating connection relation information, there may be a connection between a driving route and information on a speed limit sign. A complex connection relation, which marks a speed limit according to each driving section, a heading constraint, and lane change information, may also be accurately defined. Accordingly, an autonomous moving object may perceive and understood a road situation in real time, and safe and efficient driving may be determined. Information associated with a speed limit plays an important role especially in controlling a speed of an autonomous moving object and observing a traffic rule.

As another example, there may be a connection between a driving route and a traffic signal system. If the state and timing of a traffic signal is connected to a driving route, an autonomous moving object may predict a change of a traffic light beforehand and establish an efficient driving plan.

As yet another example, there may be a connection between a driving route and an emergency facility. If location information of an emergency facility like a fire station and a hospital located within a driving route is connected with the driving route, a more quick and accurate reaction is possible in case of emergency. The connection may be used not only to optimize a route of an emergency vehicle but also to mark an egress route.

As yet another example, there may be a connection between a driving route and weather information. If weather information is connected with a driving route, it is possible to identify and respond to a road situation beforehand according to a change of weather. For example, when a weather condition such as rain, snow and fog is predicted, an appropriate measure may be made including controlling a driving speed in a corresponding section or changing routes.

As yet another example, there may be a connection between a driving route and a parking facility. If information on a parking space currently available in a parking lot is connected with a driving route, an autonomous moving object may search for a nearest parking lot in real time.

As described above, a driving route of route information may be expressed in a polygonal shape as shown in FIG. 9. FIG. 9 shows the driving route 518 represented in a polygonal plane. Each road section is composed of consecutive vertexes, and these vertexes may be combined to accurately express the width and curvature of a road, a lane structure, and the like.

A method of expressing a driving route by a polygon may accurately reflect the actual width and shape of a road. A polygon model, which defines a driving route in a polygonal shape, may represent a shape of a road in detail as compared with a linear model that represents an outline of a road by a plurality of vertexes. For example, a conventional linear model considers only a centerline of a road, but when a polygonal expression is used, it is possible to accurately model complex shapes of both boundaries of a road, lane distinction, a median strip, sidewalk and the like.

Such an expressing method helps an autonomous moving object with establishing an accurate driving plan even in a complicated road environment and realizing safer and more efficient driving. In addition, as information on connection with another traffic structure may be included as an attribute in a polygon, an overall feature of a road may be comprehensively identified.

Next, the server 200 may generate map information including route information by incorporating route information related to connection relation information into the map information (S230) and correct or update the map information according to a predetermined condition by verifying the map information (S235).

The server 200 may modify or update map information according to a predetermined condition, while checking the map information through initial verification, simulation verification, and correction. Through checking, an estimated driving route may be checked regarding whether it has an error, and if there is an error, the server 200 may perform a correction process for the error and register the correction to a map database of the memory 204. A checking and correction process of an estimated driving route is necessary to ensure the accuracy and reliability of data. A checking and correction process is important to improve the quality of an estimated driving route and to provide a driving route matching a real driving environment. Particularly, for safe driving of an autonomous moving object, the above-described process is required and needs to be accompanied by continuous update and management.

Initial verification may check at least one of the integrity, continuity and regularity of route information. For example, initial verification may automatically test the geometrical integrity, continuity and regularity of route information through a predetermined algorithm. In this verification, an obvious error or inconsistency may be identified, and thus initial filtering may be realized.

After initial verification, a worker's checking may be added. A worker's checking may be performed on route information and map information that have passed the automatic verification. In this process, a worker may check accuracy of data by using reference data like a map or a satellite image. In addition, complex elements such as logical connectivity of a driving route, a relation with an adjacent road, and whether a road sign and a signal correspond to each other may be examined.

Simulation verification may be performed to check whether there are interference and collision among a plurality of moving objects 100, through simulation where driving of the plurality of moving objects 100 is virtualized. Specifically, the server 200 may check whether there are interference and collision between moving objects and perform analysis regarding whether they are moving at a suitable speed and in a suitable direction, by virtualizing driving of at least one autonomous moving object. According to cases, a size and a height of a moving object, a sensor view angle, weather, and a road condition may be included as simulation input values.

Then, in case a condition occurs where an error is present in at least one of initial verification, a worker's checking, and simulation verification, the server 200 may correct at least one of an object in map information, metadata, and route information based on the error.

In case an error is observed, the server 200 may correct data associated with the error by a correction algorithm or at a worker's request. In this process, the shape, connectivity and attribute of a driving route may be corrected. Among the above-described corrections, hereinafter will be described an example of modifying and updating route information of a target object, when a driving route in the route information of the target object is different from actual route information.

In case there is a predetermined range or more of deviation between actual information on an actual movement of a target object in a region corresponding at least to a predicted route of route information and the route information, the server 200 may update the route information based on the actual information. The actual information may be identified based on subsequent object travel information that the moving object 100 transmits through the process of FIG. 5 after the route information is generated. Specifically, while a target object is actually running along a predicted route of route information, the moving object 100, which obtains an actual travel route on the predicted route of the target object, may transmit subsequent object travel information of the target object according to the actual travel route to the server 200 in a time series. By at least steps S205 to S220, the server 200 may generate subsequent route information based on the subsequent object travel information. The server 200 may compare preceding route information before the target object moves to the predicted route and the subsequent route information and thus determine whether there is a predetermined range or more of deviation. If there is a predetermined range or more of deviation, the server 200 may update the route information by replacing the preceding route information by the subsequent route information.

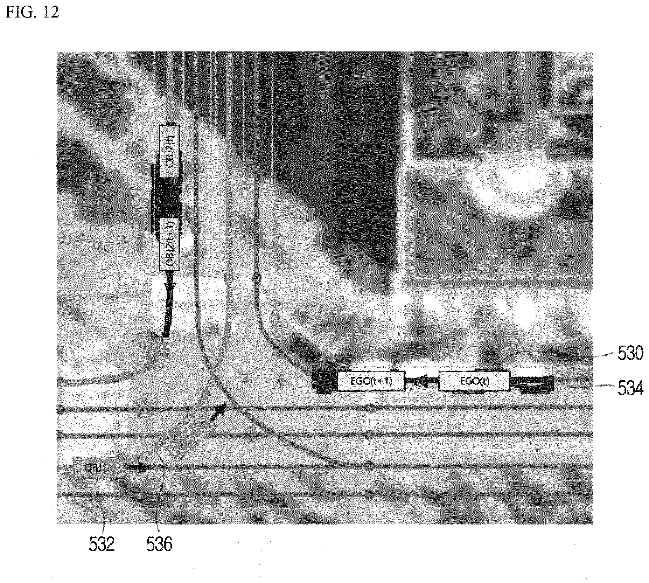

FIGS. 12 to 14 are views showing an example of verifying map information through update of route information.

As shown in FIG. 12, route information associated with a moving object and a neighboring moving object may be generated. The moving object and the neighboring moving object may be target objects associated with reference numbers 530 and 532 in FIG. 12 respectively. Route information 534 and 536 exemplified in FIG. 12 may include travel routes 530 and 532 having locations and orientations of the moving object and the neighboring moving object at each of the times t and t+1, and have connection relation information that connects a stop line and a driving route of each moving object. Route information at times t and t+1 may correspond to a travel route that the moving and the neighboring moving object have moved by the time t+1.

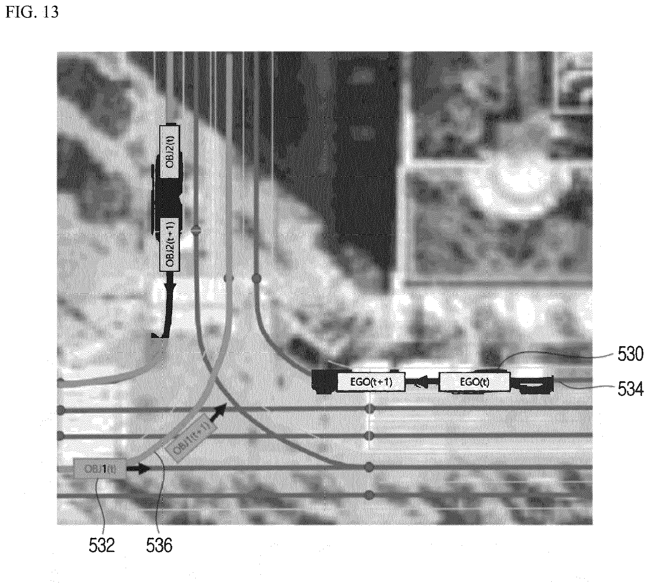

As shown in FIG. 13, the route information 534 and 536 includes predicted routes 538 and 540 for lanes that a moving object and a neighboring moving object have not traveled. Route information exemplified in FIG. 13 includes predicted routes 538 and 540 of a moving object and a neighboring moving object at times t+2 and t+3 as well as the travel routes 530 and 532 according to times t and t+1. Like the travel routes 530 and 532, the predicted routes 538 and 540 at times t+2 and t+3 may be estimated to include locations and orientations of a moving object and a neighboring moving object.

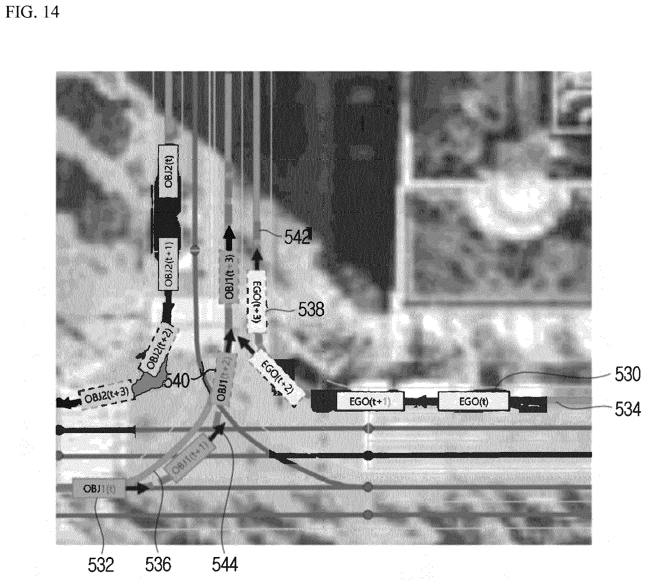

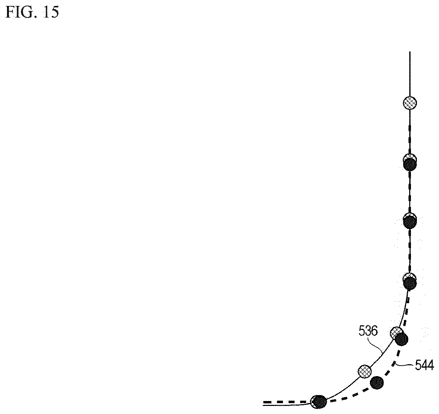

As shown in FIG. 14, when subsequent route information 542 and 544 is obtained which includes actual routes of a moving object and a neighboring moving object traveling on the predicted routes 538 and 540, the server 200 may determine whether there is a predetermined range or more of deviation between the predicted routes 538 and 540 and the actual routes, through the preceding route information 534 and 536 and the subsequent route information 542 and 544. Because a deviation between the predicted route 538 of the moving object and the actual route of the moving object is within the predetermined range, the server 200 does not update the preceding route information 534 but maintains the predicted route 538. On the other hand, because a deviation between the predicted route 540 of the neighboring moving object and the actual route of the neighboring moving object is beyond the predetermined range as shown in FIG. 14 and FIG. 15, the server 200 modifies the predicted route 540 to the actual route, changes the preceding route information 536 to the subsequent route information 544, and thus update route information. FIG. 15 is a view exemplifying update through verification of route information.

Meanwhile, the server 200 may incorporate the route information updated according to the above description into map information and thus update and register the map information to a map database. The server 200 may transmit the map information including the updated route information to the moving objects, and the moving objects may control autonomous driving based on the updated map information.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some of the steps.

The various embodiments of the present disclosure are not a list of all possible combinations and are intended to describe representative aspects of the present disclosure, and the matters described in the various embodiments may be applied independently or in combination of two or more.

In addition, various embodiments of the present disclosure may be implemented in hardware, firmware, software, or a combination thereof. In the case of implementing the present invention by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

## Claims

1. A method for constructing an autonomous driving route based on sensor perceived information, the method comprising:
obtaining a travel route by tracking a moving object and at least one target object among neighboring dynamic objects around the moving object based on perception information obtained from the moving object with an observation sensor and a positioning sensor;
generating a predicted route on which a movement is estimated from the travel route, based on the travel route;
generating route information including the travel route and the predicted route and incorporating the route information into map information;
updating the route information based on actual information, in case there is a predetermined range or more of deviation between the actual information on an actual movement of the target object in a region corresponding to the predicted route and the route information through verification of the map information; and
incorporating the updated route information into the map information.

2. The method of claim 1, wherein the obtaining of the travel route includes tracking the target object by using a trajectory based on positioning information of the target object estimated from the positioning sensor and an optimal location of the target object, and
wherein the perception information is collected as multiple pieces of perception information so that the perception information has multiple views in a time series, features are extracted from each of the multiple pieces of the perception information, relative displacement information between the observation sensor and the features is generated by matching between the features, and the optimal location is generated to minimize a spaced amount in the relative displacement information.

3. The method of claim 2, wherein the extraction of the features and the matching between the features are performed by referring to travel information and observation state information of the moving object, and the observation state information represents a state in which the observation sensor of the moving object perceives the target object.

4. The method of claim 2, further comprising providing the optimal location of the target object to the positioning information and the map information.

5. The method of one of claims 1 to 4, wherein the generating of the predicted route includes generating the predicted route based on displacement information of the target object, speed information of the target object, the travel route, environment information of a driving route of the target object, information on a regulation applied to the driving route, travel pattern information of a route identical or similar to the driving route, and cumulative route information of a route identical or similar to the driving route.

6. The method of claim 5, wherein the displacement information of the target object and the speed information of the target object are provided in a time series, the generating of the predicted route generates the predicted route by using trajectory modeling including a nonlinear state transition method based on the time-series displacement information and the time-series speed information, and the trajectory modeling is constructed to have feedback based on an error between a predicted trajectory derived by the trajectory modeling and a trajectory derived based on the perception information.

7. The method of one of claims 1 to 6, wherein the generating of the route information includes determining a single piece of object travel information, which is derived through matching for multiple pieces of object travel information of the target object, as the route information, and the multiple pieces of the object travel information are transmitted from each of a plurality of moving objects that generate a travel route and a predicted route of the target object.

8. The method of claim 7, wherein the matching for the multiple pieces of the object travel information includes performing geometrical matching between the object travel information, clustering similar object travel information based on statistical information according to a weight of the object travel information, and based on a route model based on the clustered object travel information, generating and employing the single piece of the object travel information as the route information.

9. The method of one of claims 1 to 8, wherein the incorporating the route information into the map information includes generating connection relation information that connects at least one of road information of a driving route of the target object, infrastructure information provided to the driving route, weather information of the driving route, and regulation information applied to the driving route to the route information.

10. The method of one of claims 1 to 9, wherein the verification of the map information includes performing initial verification that checks at least one of integrity, continuity and regularity of the route information, performing simulation verification that identifies whether there are interference and collision between a plurality of moving objects through a simulation that virtualizes driving of the plurality of the moving objects, and correcting at least one of an object in the map information, metadata, and the route information based on an error occurring in the initial verification and the simulation verification.

11. An autonomous driving assistant device constructing a route of autonomous driving by using sensor perceived information, the autonomous driving assistant device comprising:
a communication unit configured to exchange data with a moving object;
a memory configured to store at least one instruction; and
a processor configured to execute the at least one instruction stored in the memory by using the data,
wherein the moving object obtains a travel route by tracking a moving object and at least one target object among neighboring dynamic objects around the moving object based on perception information obtained from the moving object with an observation sensor and a positioning sensor and generates a predicted route on which a movement is estimated from the travel route, based on the travel route, and
wherein the processor is further configured to:
generate route information including the travel route and the predicted route and incorporate the route information into map information,
update the route information based on actual information, in case there is a predetermined range or more of deviation between the actual information on an actual movement of the target object in a region corresponding to the predicted route and the route information through verification of the map information, and
incorporate the updated route information into the map information.
